# EUROPEAN PATENT APPLICATION

(11) **EP 1 921 854 A1**
(43) Date of publication of application: **14.05.2008**
(21) Application number: 06255783.0
(22) Date of filing: 10.11.2006
(51) Int. Cl.: H04N 7/10, G06T 3/00, G06F 17/00

(54) **Mobile TV service**

(71) Applicant: Hutchison Whampoa Three G IP (Bahamas) Limited, Nassau, New Providence (BS)
(72) Inventor: Rydahl, Karl, 11241 Enskede (SE); Liran, Shlomo, 114 24 Stockholm (SE); Nilsson, Mattias, 115 42 Stockholm (SE); Palmkvist, Jonas, 117 36 Stockholm (SE); Averskog, Christian, 13236 Saltsjö-Boo (SE)
(74) Representative: Crawford, Andrew Birkby

(57) **Abstract**

In a service for allowing TV to be displayed on mobile telephones (1) an application server (33) is provided to which the mobile telephones can connect. A TV application is running, having one part in the application server and local parts in the mobile telephones. The TV application manages the video data sent as streaming data to the mobile telephones and can also itself transmit video data from a storage place (63, 65) that is located in or is connected to the application server. Such video data can include already broadcast TV programs and they can be sent to a mobile telephone on special request. Such video data stored in the storage place can also include video data that are specially stored for the user of a mobile telephone. When invoking the TV service from a mobile telephone the last TV channel shown on the display of the mobile telephone is automatically shown. Streaming video data received in a mobile telephone are automatically adapted to the dimensions of the display of the mobile telephone so that the pictures that said received data represent are shown in the best possible way, e.g. in a landscape view.

## Description

### TECHNICAL FIELD

The present invention relates to a TV service or TV application for mobile telephones, in particular a service or application allowing mobile telephone users to enjoy traditional broadcasted TV.

### BACKGROUND

Some of the currently used mobile telephone networks, also called cellular networks, allow very fast transmission of digital data to connected mobile telephones, also called cellular telephones or cellular phones. The fast transmission can be used for transferring streaming data, such as audio data for music and video data for moving pictures. The moving pictures can e.g. be the pictures broadcast by a TV company.

### SUMMARY

It is an object of the invention to provide a mobile telephone system allowing users to look at broadcast TV.

The problems that the invention intends to solve include e.g. how a mobile telephone system allowing users to look at broadcast TV can be provided that is user-friendly or that at least in some aspect or aspects behaves similarly to conventional TV sets.

A mobile telephone having video playing facilities may include at least one of the following features, possibly two or more in combination:

The user can look at "broadcast" channels using live streaming technology.

The pictures corresponding to received video data can be looked at in a landscape mode that can give an enhanced viewing experience.

When the user starts the TV service application the most recent TV channel having been received in the mobile telephone is shown.

The pictures are shown automatically in a full screen mode upon startup of the TV service application. This viewing mode may be automatically entered from other interfaces in the TV service application after a time period of no user input.

A numeric list of channels can be available and also extended data of TV programs.

In one mode an EPG (Electronic Program Guide) comprising program information can be displayed.

Reminders can be set for future TV programs. This function may be incorporated in the calendar function of the mobile telephone

A 7-Day TV function can be provided in which previously broadcast programs are made available via on demand streaming.

Channel No. 0 can be used by individual users for storing TV content.

A purchase function can include a set of different measures:

Open access functions can be provided, e.g. so that the EPG is available to all users.

Immediate access allows the user to pay in order to gain access to the streaming media directly.

An in-client purchase function can be provided that includes that a purchasing function is integrated in the application.

A real time subscription check may be performed every time that the user issues a request to receive streaming media.

Flexible subscription types may include that subscriptions can be offered for stand alone TV channels or for packages of TV channels.

Flexible payment options can include a pre-paid option, a post-paid option, and a trial option.

These various functionalities incorporated in the TV application or service for mobile telephones can give users significant value. This combination in turn adds qualities including immediacy, flexibility, and user-familiarity to the mobile TV technology in the telecommunication field. More specifically, the following functionalities in the TV application or service as described herein may in particular give advantages:
- The 7-Day TV function
- The special use of Channel No. 0
- Landscape mode viewing
- Showing the most recent TV channel on start-up
- Automatic full screen viewing

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Figs. 1a - 1d are perspective views of a mobile telephone in which a TV application is running, the display showing different images in four different operation modes,
- Fig. 1f is a schematic showing the most important features of the mobile telephone of Figs. 1a - 1d,
- Fig. 2a is a perspective view similar to Fig. 1c but in a larger scale,
- Fig. 2b is a picture illustrating how a brick area is the active part of a larger composite imagined information field,
- Fig. 3a is a flow diagram of the first steps performed when a TV application is started in a mobile telephone,
- Fig. 3b is a flow diagram of steps performed in a preview mode of the TV application,
- Fig. 3c is a schematic illustrating various menu choices, and
- Fig. 4 is a block diagram of a mobile telephone system allowing users of mobile telephones to look at TV on their mobile telephones.

### DETAILED DESCRIPTION

A mobile TV application or service will now be described that is designed to provide streamed TV and video content to users of mobile telephones. By using their mobile telephones, the users can perform tasks included in the application that are similar to those used in traditional TV usage. By doing so, the mobile TV service provides a transition from stationary TV used in private homes and companies to mobile TV available wherever at the convenience of the users.

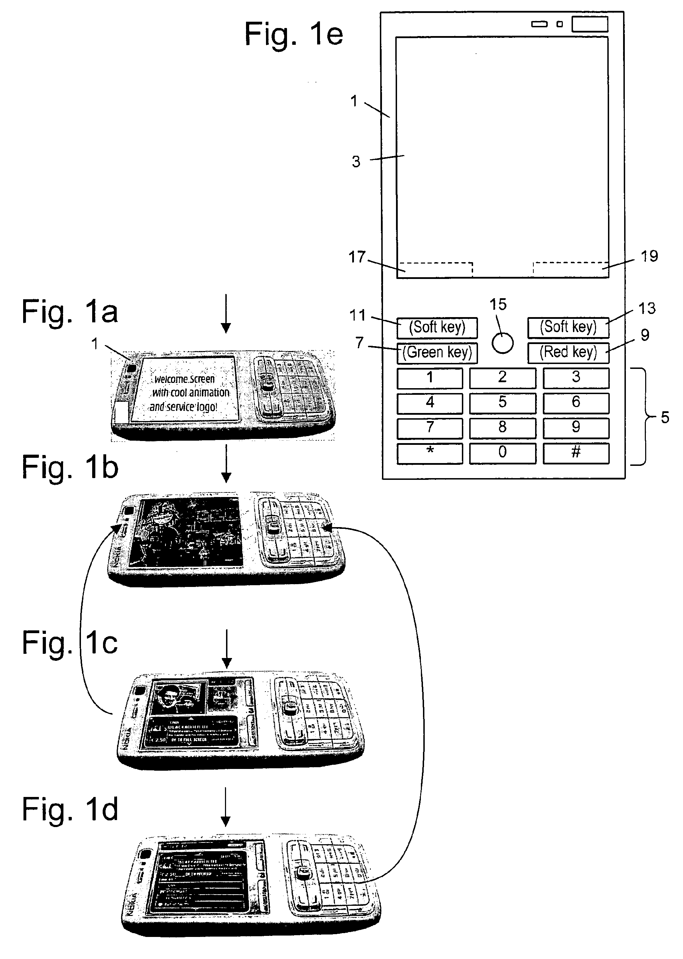

In order to offer intuitive and efficient usage, according to the service, the conventional display window of the mobile telephones may be viewed in a landscape mode when using the mobile TV application. The rotation that may be necessary can be performed automatically inside the mobile telephone and may permit an extended usage of the display - offering the users enhanced entertainment value, this being an apparent distinction from the use of many conventional mobile telephones. During an incoming telephone call the device may prompt the user as to the fact whether he/she wants to answer the call and can then resume a standard mode for receiving and making telephone calls. The layout of a typical mobile telephone 1 having built-in facilities for media playing is illustrated in Fig. 1e. It has a rectangular display 3 that may have a format with its long sides oriented parallel to the longitudinal or height direction of the mobile telephone. A conventional keyboard 5 is provided having at its top side a "green" or "yes" key 7 and a "red" or "no" key 9. Above these latter keys two soft keys 11, 13 are located. In the center of these four special keys a rocker key 15 or simply "rocker" is arranged that has five functions: it can be depressed, turned or tilted to the left and to the right and turned or tilted upwards and downwards. The four latter functions are conventionally used for navigating and the first function is an OK function or "Enter" function. The current functions of the two soft keys 11, 13 can e.g. be indicated in fields 17, 19 located in the picture shown on the display 3.

A graphic user interface shown by the display 3 allows a user of the mobile telephone to view streamed media on the display and carry out other functions related thereto. The flow of different pictures shown in the total interface is illustrated in Figs. 1a - 1d. A 7-day TV function may be incorporated in the service that allows users to enjoy TV-programs sent throughout the past week, so that a user can obtain access to contents to suit the user's own wish. The users can also store TV programs of their choice on a personal channel provided for each user - channel No. 0. Furthermore, a purchasing function can be incorporated in the application allowing users to gain access to streaming media directly through a set of subscription options.

The mobile TV application can be accessed directly from the conventional idle screen of a mobile telephone that is used during standby when there is no special activity in the telephone. For example, soft key entries may allow the user to enter the start interface of the mobile TV service or application. In another alternatives, a hardware button may be used or set to access the TV service or the mobile TV service may be started from choosing an option on a menu for e.g. available services.

When using the mobile TV application, the user may have to turn the mobile telephone to view the display thereof in a landscape mode. The default option is turning the device 90° clockwise, an obvious alternative being turning it 90° counter-clockwise.

The flow of different steps executed when using the mobile TV service application will now be described in somewhat more detail.

Upon start, in an entrance mode a welcome picture may be shown on the display 3 of the mobile telephone 3 for a few seconds, see Fig. 1a. An animation loop may e.g. be included making the name and the logo of the TV service appear in the picture shown.

After the welcome picture or directly, if the welcome picture is not used, the TV channel last viewed by the user of the mobile telephone 1 is launched in a full screen mode, see Fig. 1b. If the user has never used the mobile TV service, TV channel No. 1 is automatically chosen to be viewed in full screen mode. Instead of going through a set of settings and options, the entering of full screen viewing of the most recent channel directly after having accessed the application, gives the user an increased ease in the usage and instant entertainment.

In this mode of full screen viewing the video pictures cover the entire area of the display 3 allowing the TV content to be in focus, without being disturbed by any text or extra fields.

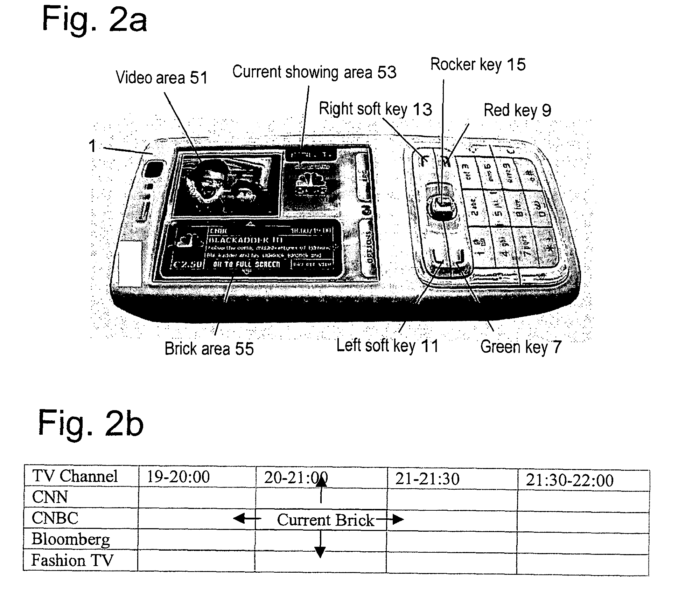

From the full screen mode the user can access a preview interface, see Figs. 1c and 2, by touching the center of the rocker key 15, i.e. by simply depressing it, or alternatively the left or right soft key 11, 13. In any mode of the TV service application, the user can exit it by depressing the "red" or "no" key 9, the display then starting to show the standard idling picture.

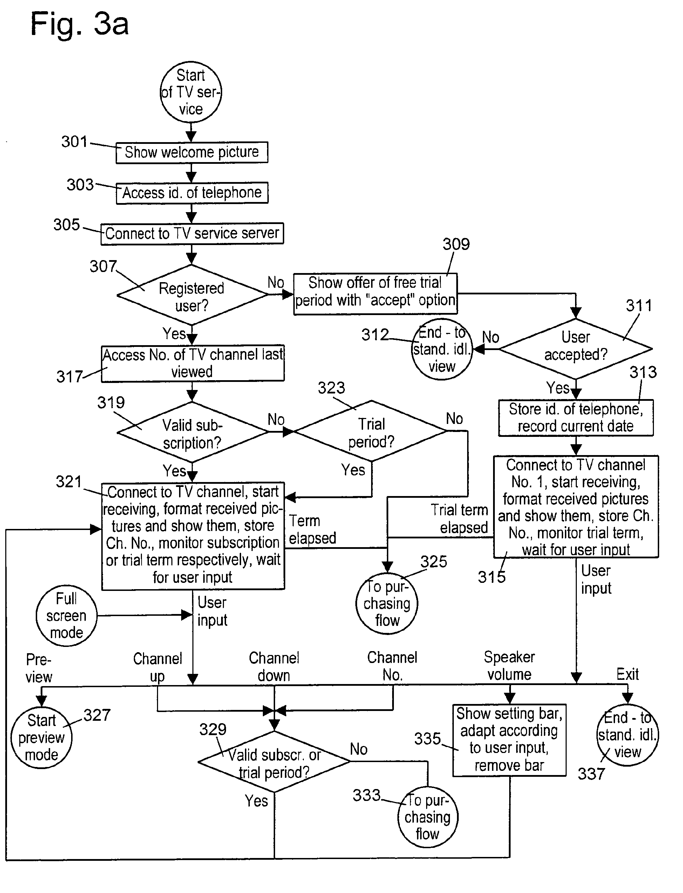

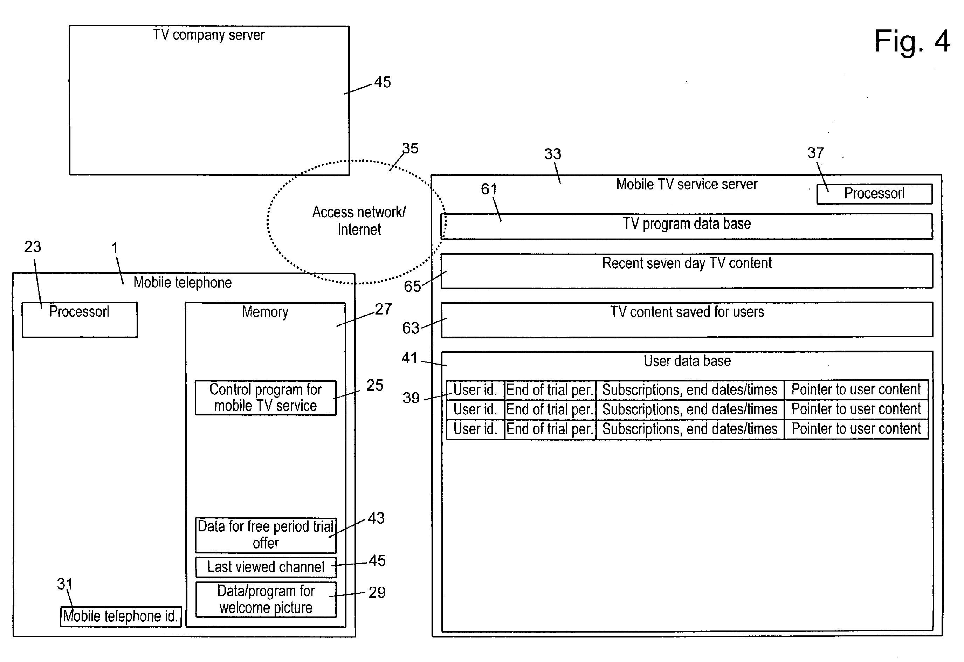

A flow chart of the steps performed when starting the TV service is illustrated in Fig. 3a. The various program modules, program units, memory cells and databases used or required are illustrated in the block diagram of Fig. 4. The mobile TV service application is provided by the processor 23 of the mobile telephone 1 executing a control program stored in a memory place 25 in the memory 27 of the mobile telephone.

Thus, when invoking the TV application, the processor 23 starts to execute the control program. In a first step 301 the processor retrieves the data and/or program module for the welcome picture from a memory place 29 and displays the welcome picture based on the retrieved data/program. Then, or possibly before, the identification of the mobile telephone is retrieved such as taking it from a special place 31 in the mobile telephone 1, such as the SIM-card, not shown, in a step 303. Thereupon, a connection to a mobile TV service server 33 is established in a step 305 which can require also communication through some network 35 different from the mobile telephony network or cellular network, not shown, used for the ordinary communication for transmitting primarily voice. Such another network can e.g. include an access network and the Internet. Hence, the TV service server 33 is also connected to the other network 35.

A dialog is then started with the TV service server 33 and in particular with a control program executed by a processor 37 in the server. From the mobile telephone 1 the identification of the telephone is sent to the service server which receives the identification and then determines in a step 307 whether the received identification belongs to a registered user. This determining is made by comparing the received identification to records 39 stored in a user data base 41 in or connected to the TV service server 33. If the determining has the result that there is no registered user associated with the received identification, this is communicated to the processor 23 of the mobile telephone 1 and a step 309 is executed in which a picture is shown on the display 3 offering a free trial period. The data and/or program for showing this picture is taken from a memory place 43. If the user of the mobile telephone 1 makes some input indicating that the offer is not accepted, or possibly after some time-out period, the standard idling view is again shown on the display 3, as indicated by the steps 311, 313.

If the user instead indicates that he/she is willing to accept the offer a new record is in a step 313 created in the database 41, this record including the identification of the mobile telephone and other data that may be necessary such as the times for start and/or end of the free trial period. Then, in a step 315, the processor 23 of the mobile telephone 1 performs a procedure for connecting to the server 45 of a preferred TV company with which the owner of the TV service application, in particular of the TV service server 37 and associated software, has an agreement. After connecting, the processor requests that current streaming data from channel No. 1 of the TV company should be sent to the mobile telephone. Hence, now the stream of pictures from this TV channel are shown on the display 3, in a full screen mode. The number of the channel, i.e. the number 1 in this case, is stored in a memory place 47. Also, a routine for monitoring the end of the trial period is started, this being active as long as streaming TV data are received. Then the mobile telephone 1 may request and in any way receives information about the time when the trial period elapses and then is all the time comparing this time to the current time.

If the processor 37 of the TV service server 33 in step 307 found that the identification received agrees with the identification in one of the records in the database 41, this is communicated to the mobile telephone processor 23 which in a step 317 retrieves the number of the TV channel that was latest shown on the display 3. This number may be stored in the memory place 47 in the memory 27 of the telephone 1. Simultaneously, the processor of the TV service server examines, see step 319, the found record for information whether the user has a valid subscription. If there is a valid subscription, procedures are in a step 321 performed similar to those in step 315. Thus, the telephone processor 23 connects to the TV company server 43. After connecting, the processor requests that current streaming data from the TV channel having the retrieved number should be sent to the mobile telephone. This TV channel is then started to be shown on the display 3. A routine for monitoring the end of the subscription period is started, this being active as long as streaming TV data are received. Then the mobile telephone may request and in any way somehow receives information about the time when the subscription period elapses and then is all the time comparing this time to the current time.

If it was determined in step 319 that the user has no valid subscription, the TV service server processor 37 performs operations in a step 323 for determining whether the user is in a trial period. If this is true, step 321 is performed where instead of the subscription period the trial period is monitored. In the monitoring process, in steps 315 and 321, in the case where it is determined that the subscription period or the trial period, respectively, has elapsed a purchase flow is started, see step 325.

In the full screen mode entered in steps 315 and 321 the user can input commands using the keys of the mobile telephone as described above. In particular, the preview mode can be entered by e.g. depressing the rocker 15 or the left or right soft key, see step 327, and navigating to the other TV channels can be made by tilting the rocker up and down or entering a number using the numerical keys of the keyboard 5. When receiving such input, the processor 23 may check, in the case where subscriptions or trial offers are limited to selected or predetermined channels, whether the user has a valid subscription or an on-going trial period including the now selected channel, see step 329. If it is true, the step 321 is performed in which the new TV channel from TV company server 45 is requested and the picture data for this channel starts to be streamed to the mobile telephone 1. The number of the selected channel is stored in the memory place 47. If the user has no subscription or trial period encompassing the now selected channel, the purchase flow is started, see step 333. If one of the volume keys, not shown, is touched a volume setting bar is shown on the display in the conventional way, see step 335, the cursor on the bar indicating the set or changed volume, this function being available also in the other modes. The showing of the setting bar is ended after a predetermined time period after the last manual volume setting input. Finally, when depressing the "red" or "no" key 9, the TV application is terminated and the standard idling view is again shown, see step 337.

In the preview mode, if the user does not take any action during a predetermined period of time, for instance 10 seconds, the display 3 automatically resumes to the full screen mode, showing pictures from the channel most recently tuned into.

In the preview interface mode a composite picture is shown, see in particular Fig. 2a. The picture shown contains the following fields.

In a video area 51 the pictures sent in the chosen channel are shown. If that channel has not been purchased no streamed pictures are shown but it is indicated in the video area by displaying a suitable message ("Sorry, you have no ..."").

In a currently showing area 53 the logo and/or other identification of the channel that currently is shown in the video area and/or the logo and/or other identification of the corresponding TV broadcasting company is displayed.

In a field 55 called the brick area information about the program currently shown is displayed. In this field information such as the name of the channel, the name of the program, start and end times of the program can be shown. A price indicator can also be displayed.

It is possible to navigate in all four directions in a larger "imaginative" composite field, the information shown in the brick area 55 always corresponding to a selected subfield of the larger composite field, see Fig. 2b. Navigating left and right using the rocker 15 allows the user to browse in the program list of the channel. It is possible to navigate 7 days back and to access content that has been previously broadcasted. Navigating up and down using the rocker key lets the user view the program list of other channels. If the rocker 15 is depressed the choice in the brick area is activated and the procedure for starting to show the selected content is started. If the user has no subscription to the selected channel and is not in a free trial period the purchase flow is instead started.

The left soft key 11 can have any suitable function such as displaying an options menu from which different functions can be reached such as start a "Search" function, go to a "Settings" display or menu, go to a "Help" function, to a special "Purchase" option, show an "About" information picture or a Program Information picture or to return back to the full screen mode. If the shown brick area shows information about a TV program that has already been shown there may also be menu options such as "OnDemand", go to a "Preview" function. The "Preview" function can also be reached if the brick area corresponds to the already selected TV channel. If the shown brick area shows information about a TV program that has not yet been sent there may be menu options such as a "Set Reminder" function. In this function an alarm is set in the mobile telephone to inform the user when the transmission time for the TV program is close to the current time. Some of the functions listed above can be arranged e.g. similarly to corresponding functions used in computer browsers and other computer programs. As above, the TV service is terminated if the "red" key 9 is depressed. By depressing the right soft key 13 a guide view interface for showing an electronic program guide (EPG) is started.

In the purchasing option the video data of the program the information of which is shown in the brick area may be stored, e.g. in the TV service server 37, especially for the user in a channel No. 0 as will be described below. This presupposes that the user has purchased or now purchases the TV program and corresponding storage space.

The guide view interface provides explicit viewing of the electronic program guide. As an extension of the preview, it shares the same logic as the previous interface in the preview mode. The video area is removed and more space is used for information on available channels and programs, and hence it can be called a full screen version of the brick area 55.

As already mentioned, a user can access the guide view interface by pressing the right soft key 13 when in the preview mode. Once entered, the right soft key will be labeled "Back", this word shown in the field 19, taking the user up one level to the preview mode. Moving the rocker key 15 up and down, left and right allows the user to look at information about programs in different channels as described for brick area 55 in the preview mode.

The 7-day TV function allows the user to watch TV-programs that have been broadcast during the previous 7-days. The available contents can be presented in the EPG and in the brick area 55 in the preview mode. By scrolling leftwards using the rocker key 15, the user can obtain information about the programs shown throughout the last week, and select the one to be streamed at his/her demand.

The presentation of the stored content is available to all users. Provided that the TV-channels permits it, the availability of the TV-programs do not require particular user triggering. The user can simply navigate using the EPG and select the desired program, and the on-demand TV-content starts to be streamed.

Channel No. 0 serves as the user's personal channel. This is similar to channel No. 0 on conventional TV sets that is usually connected to a video recorder. Using this function the users can store TV programs of their choice in their personal channel. It allows users to save contents of their individual preference for as long time as they wish, and to freely access the stored content.

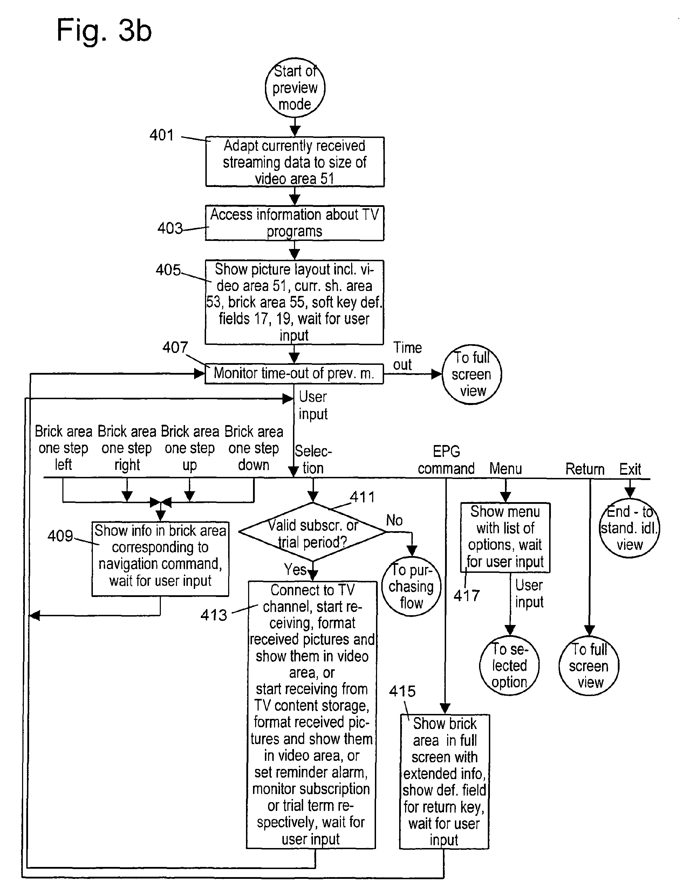

In the flow diagram of Fig. 3b the steps performed in the preview mode and the EPG are illustrated. After having received user input indicating that the preview mode is to be started, the currently received streaming video data are in a step 401 adapted to the smaller window size of the video area 51. Then, in a step 403 information on all available TV programs and TV program that will be available in the near future is accessed in some suitable way, such as fetching it from a data base 61 in or connected to the TV service server 33, this information also including information on possible available TV programs especially stored for the user in storage area 63 in the TV service server. The basic information on the available TV programs can alternatively be obtained from some other database, not shown, such as a program database monitored by the TV company that owns the TV company server 45. On the display 3 a new picture layout is thereupon shown in a step 405, as seen in Fig. 2a, including the video area 51, the currently showing area 53, the brick area 55 and suitable information in the soft key definition fields 17, 19. All the time, the procedure waits for input from the user and in a step 507 time-out of the preview mode is monitored.

When the rocker key 15 is tilted or moved laterally, the information in the brick area is changed accordingly in a step 409, the information taken from the previously accessed program information. The access of program information can also be organized so that in each access, only information for one TV channel is accessed, this meaning that if the rocker key is moved to the right or the left no more information has to be accessed but if moved upwards or downwards, i.e. to another channel than that currently shown in the brick area, new program information has to be accessed.

If the rocker key 15 is depressed, i.e. is centrally touched, it means a selection of the TV program for which information is currently being shown in the brick area 55. Then it is determined in a step 411 whether the user has a valid subscription, i.e. have already paid, or has an on-going trial period for the chosen TV program. If it is not true, the purchasing flow is started and otherwise a step 413 is executed. In this step 413, if the selection means an active TV channel, a procedure similar to that described for step 319 is performed, i.e. the mobile telephone 1 is connected to the respective TV channel, it starts to receive, the channel number is stored, etc. If the selection means a program that has been previously broadcast, the corresponding video data is started to be streamed from a TV content storage area 65 in the TV service server 33. If the selection means a program especially saved for the user, the video data is instead started to be streamed from the special content area 65. The procedure for monitoring the subscription period or the trial term is started as above for the now selected streaming video data and the flow again waits for user input.

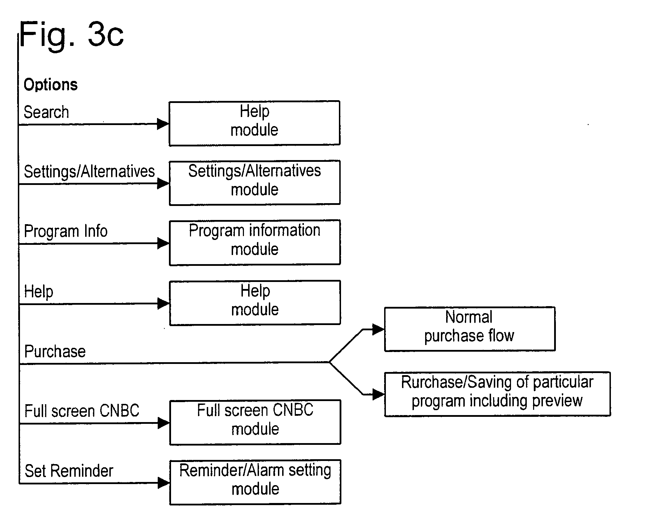

If the right soft key 13 is depressed, it means that the EPG will be displayed in full screen mode and hence this is executed in a step 415, the definition field 19 then instead indicating for the right soft key a return function for returning to the preview mode. If the left soft key 11 is depressed a menu is in a step 417 shown that lists a plurality of menu options, some of which depend on the type of TV program for which information is currently shown in the brick area 55. The menu options are illustrated in Fig. 3c. In the menu option "Purchase", if the selected program is one that is not currently being broadcast, the user can purchase this program meaning that the video data of the program is saved or will be saved. Also, before actually commanding the purchasing/saving some preview of one or more pictures or a trailer of the program may be shown on the display.

Generally, the purchase function, also called the purchasing flow, is integrated in the application to allow users to directly gain access to the streaming media. Every time the user requests to stream media a subscription check is performed. The user is prompted when he/she tries to access a channel without a valid subscription. The user can also initiate the procedure by choosing the option "Purchase" on the option menu. By pressing "Cancel", e.g. the right soft key 13, the user exits the procedure.

The purchase procedure allows users to gain access to streaming media. The EPG and other functions of the application are available to all users with or without a valid subscription.

Users can be one of the three types including users having no subscription, users having a subscription to a single channel and users having a subscription to a package, i.e. a set of TV channels. They can be offered a set of options accordingly.

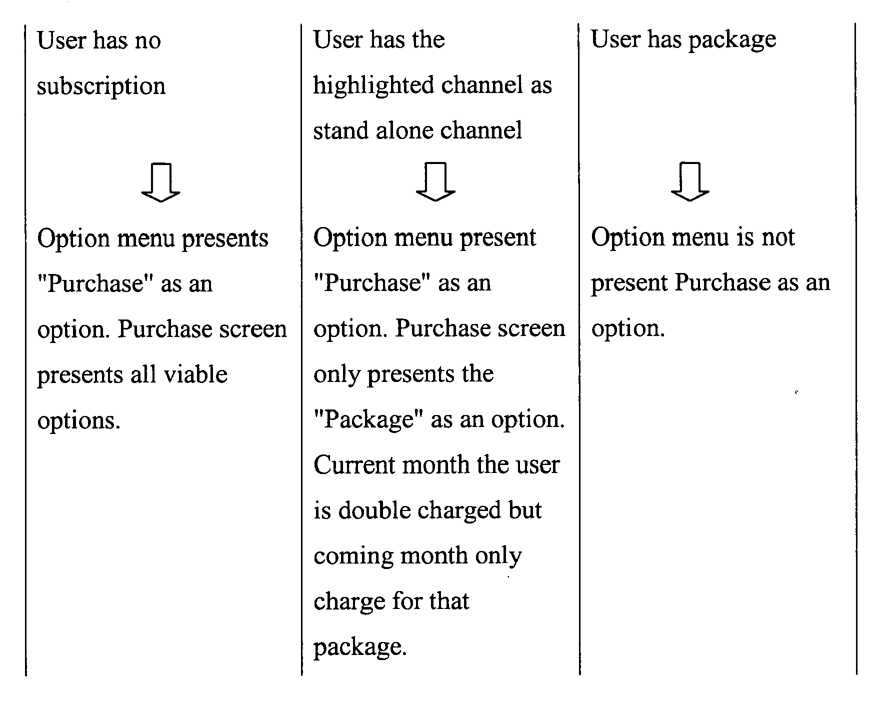

As described above, users are granted a period of free access, for instance one month starting from the first time when the user enters the application. It is possible to track, using the database 41, the persons who have been trying the service.

Pre-paid: Users buys a time-limited access, e.g. 30 days, for a particular single channel or for all channels.

Post-paid: Users pay for monthly recurring subscriptions for a particular single channel or for all channels.

Roaming: The server application holds a whitelist of telephone networks in which the mobile TV application functions normally. If the application roams to a network not included in the whitelist an information message is displayed to the user informing that the service will not fully function in the current network. The EPG and other functionality continue to work normally.

Upon the start of the application and upon configurable time-intervals an HTTP-request is triggered that will fetch information regarding the status of the current mobile network. If the application is roaming in a network not included in the whitelist an information message is displayed to the user informing that the service will not fully function in the current network and that data-traffic will be charged if the service is used. In the information message the user has the option to exit the application.

Specific examples of units and subunits for executing the different tasks and steps of the procedures as disclosed herein have been given and also of their organization and relationship. However, it is obvious for a person skilled in the art that the units and subunits necessary for executing the procedures may be designed, organized and related in a plurality of alternative, equivalent ways, such as that groups of the tasks and steps may be executed by a single unit or subunit instead of being executed by a plurality of units and/or subunits or be executed by a plurality of units and/or subunits different from those described herein, that a unit or subunit for a special task or step may be included in a unit and/or subunit different from that described herein, and that the execution of some of the tasks and steps may be split between a plurality of units and subunits instead of being executed by a single unit or subunit.

While specific embodiments of the invention have been illustrated and described herein, it is realized that numerous other embodiments may be envisaged and that numerous additional advantages, modifications and changes will readily occur to those skilled in the art without departing from the spirit and scope of the invention. Therefore, the invention in its broader aspects is not limited to the specific details, representative devices and illustrated examples shown and described herein. Accordingly, various modifications may be made without departing from the spirit or scope of the general inventive concept as defined by the appended claims and their equivalents. It is therefore to be understood that the appended claims are intended to cover all such modifications and changes as fall within a true spirit and scope of the invention. Numerous other embodiments may be envisaged without departing from the spirit and scope of the invention.

## Claims

1. A mobile telephony system including
- a mobile telephone owned by a user and including a TV application for playing video items received as streaming data,
- an application server to which the mobile telephone is connectable and in which a TV application is running, adapted to send video data as streaming data to the mobile telephone,
- a storage in or connected to the application server,
**characterized in that** video data corresponding to already broadcast TV programs are stored in said storage and can on request be sent to the mobile telephone.

2. A mobile telephony system according to claim 1, **characterized in that** at least some of the video data stored in said storage are video data for TV programs already broadcast during a predetermined time period from the current time.

3. A mobile telephony system according to claim 1, **characterized in that** the video data stored in said storage include video data stored specially for the user of the mobile telephone.

4. A mobile telephony system according to claim 3, **characterized in that** the video data stored specially for the user of the mobile telephone are displayed as a TV channel corresponding to the channel used for showing pictures corresponding to video data from a stationary playing device connected to a standard TV set.

5. A mobile telephony system according to claim 1, **characterized in that** the mobile telephone has a memory place for storing an identification of the last TV channel for which pictures of the broadcast video data has been shown on the mobile telephone and that the TV application in the mobile telephone is adapted to access the stored identification and to show the currently broadcast video data from this TV channel when starting the TV application in the mobile telephone.

6. A mobile telephony system according to claim 1, **characterized in that** the TV application in the mobile telephone is adapted to format received streaming video data to adapt them to the dimensions of the display of the mobile telephone so that in particular the pictures that said received data represent are shown in the best possible way, in particular so that the pictures are rotated if required.

7. A mobile telephony system according to claim 1, **characterized in that** the TV application in the mobile telephone, when running, is adapted to always show pictures corresponding to received streaming data in a full screen view if no input from the user has been made during a predetermined time period.
